# FASCICULE DE BREVET EUROPEEN

(11) **EP 2 540 620 B1**
(45) Date de publication et mention de la délivrance du brevet: **25.02.2015**
(21) Numéro de dépôt: 12004574.5
(22) Date de dépôt: 18.06.2012
(51) Int. Cl.: B64C 11/26, B64C 27/473, B29D 99/00

(54) **Pale de rotor, et aéronef**
Rotorblatt und Luftfahrzeug, ausgestattet mit einem derartigen Rotorblatt
Rotor blade and aircraft, equipped therewith

(30) Priorité: 30.06.2011 FR 1102043
(43) Date de publication de la demande: 02.01.2013
(73) Titulaire: Airbus Helicopters, 13725 Marignane Cedex (FR)
(72) Inventeur: Bianchi, Laurent, 13012 Marseille (FR); Gaffiero, Jacques, 75017 Paris (FR); Charreyre, Alain, 60128 Mortefontaine (FR); Marchand, François, 77270 Villeparisis (FR)
(74) Mandataire: GPI & Associés

(56) Documents cités:
- EP-A1- 0 307 288
- EP-A2- 0 353 672
- US-A- 3 694 104

## Description

La présente invention concerne une pale de rotor, et un aéronef muni d'une pale.

Plus particulièrement, la pale peut être une pale d'une hélice propulsive d'un aéronef, ou une pale d'un rotor de sustentation d'un giravion voire d'un rotor de commande en lacet d'un tel giravion. Cependant, une telle pale peut être utilisée pour d'autres types de rotors dans le cadre d'une aube d'un compresseur, d'un rotor d'éolienne, d'un rotor d'un ventilateur, ou encore d'un rotor de propulsion d'un navire par exemple.

Lors de son mouvement rotatif, une pale est soumise à un torseur, c'est-à-dire en termes de résistance des matériaux à une force générale résultante et à un moment résultant en chaque point. Par suite, une telle pale est soumise notamment à une force centrifuge ainsi qu'à des efforts multiples dus aux mouvements de battement, de traînée et de torsion, la torsion étant provoquée notamment par les changements de pas visant à modifier l'inclinaison de la pale par rapport au plan du moyeu soutenant cette pale. Ces forces génèrent bien sûr des moments de flexion et de torsion.

Les forces et moments subis par la pale dus en particulier à la force centrifuge et aux sollicitations en torsion doivent alors être transmis au moyeu par la pale.

Les moyens de fixation de la pale au moyeu sont alors soumis à des forces et des moments susceptibles d'être destructeurs, le terme « effort » désigne par la suite lesdites forces et/ou lesdits moments par raison de simplification.

Classiquement, une pale comporte une coque parfois dénommée « revêtement » ou encore « revêtement extérieur ».

La coque est munie d'une paroi d'extrados et d'une paroi d'intrados s'étendant d'une première zone de bord d'attaque vers une deuxième zone de bord de fuite. Sur une pale en matériaux composites, la coque peut comporter une paroi d'extrados et une paroi d'intrados solidaires l'une de l'autre comportant chacune au moins une couche de tissus à base de fibres à haute résistance mécanique agglomérées par une matrice. La paroi d'extrados et la paroi d'intrados peuvent être réalisées séparément puis jointes l'une à l'autre, ou fabriquées conjointement par bobinage par exemple.

Cette coque est creuse de manière à accueillir généralement au moins un longeron permettant notamment la reprise des efforts centrifuges qui s'exercent sur la pale en rotation et au moins un élément de remplissage. Chaque longeron peut être en matériaux composites, en étant réalisé à l'aide de fibres agglomérées par une matrice, les fibres décrivant une structure en forme de U par exemple.

De plus, il est courant de munir d'un arêtier la zone de bord de fuite de la coque pour renforcer la pale soumise notamment à des sollicitations en traînée.

Le document EP 0 570 527 présente une pale munie d'un longeron comportant au moins un élément de caisson de torsion avant allongé dans le sens de l'envergure et au moins un élément de caisson de torsion arrière allongé dans le sens de l'envergure reliés par une âme de cisaillement en corde.

Le longeron est réalisé à l'aide de deux moitiés d'enveloppes collées dos à dos.

Le document FR 1 579 886 présente une pale munie d'un longeron constitué par une structure creuse en forme de caisson qui comprend deux éléments opposés en forme de U s'emboitant l'un dans l'autre.

Le document EP 0 307 288 décrit une pale de rotor munie d'un dispositif d'attache à douilles.

Le document US 3 694 104 présente une aube de turbomachine.

Le document EP 0 353 672 décrit une pale d'hélice en un matériau renforcé de fibres.

La présente invention a alors pour objet de proposer une pale alternative ayant notamment pour fonction de minimiser les conséquences d'un impact accidentel.

Selon l'invention, une pale de rotor est munie d'un revêtement extérieur et d'au moins un longeron de reprise d'efforts associé à au moins une douille de brochage, ce longeron s'étendant en envergure d'une zone d'attache vers une zone distale, la zone d'attache d'un longeron étant traversée par ladite au moins une douille de brochage de ce longeron. Il est à noter que la zone d'attache peut saillir du revêtement extérieur.

Cette pale est notamment remarquable en ce que chaque longeron est un longeron compartimenté comprenant un moyen de reprise de la force centrifuge inscrit dans une enveloppe de reprise de sollicitations en torsion, ledit moyen de reprise de la force centrifuge comportant au moins deux caissons traversés chacun par ladite douille de brochage du longeron, chaque caisson formant un compartiment d'un longeron, chaque caisson comprenant une ceinture de rétention fermée s'étendant selon l'envergure de la pale, la ceinture de rétention d'un caisson d'un longeron entourant la ceinture de rétention d'un autre caisson de ce longeron, chaque ceinture de rétention étant munie de fibres unidirectionnelles enroulées autour de ladite douille de brochage, ladite enveloppe étant munie de fibres inclinées présentant une angulation par rapport auxdites fibres unidirectionnelles.

On note que l'on entend par « fibres» des fibres de verre, de basalte, de carbone, de kevlar ou d'autres types de fibres de renfort équivalentes voire des tissus de fibres en bande. Ces fibres sont éventuellement soit « poudrées » en étant préimprégnées par une résine d'injection dans le cadre d'un procédé de fabrication mettant en oeuvre une application de type infusion ou moulage par transfert de résine, soit associées à une résine époxy ou équivalent, soit associées à un placement filamentaire.

On comprend qu'il est concevable de combiner des fibres de diverses natures pour optimiser les caractéristiques des ceintures de rétention.

De plus, pour reprendre les efforts générés par la force centrifuge sur la pale lors de son utilisation, le moyen de reprise de la force centrifuge comprend des fibres unidirectionnelles dirigées selon un axe longitudinal de la pale par exemple. Toutefois, ces fibres unidirectionnelles longitudinales peuvent être complétées optionnellement par des fibres inclinées présentant une angulation par rapport aux fibres unidirectionnelles longitudinales pour améliorer les caractéristiques de tenue mécanique de la ceinture de rétention selon une direction transverse, voire afin améliorer les conditions de fabrication de la ceinture de rétention d'un caisson.

Selon un autre aspect, chaque longeron comprend une enveloppe externe pour transmettre les sollicitations en torsion exercées sur la pale en rotation à un moyeu.

Selon une variante, on réalise cette enveloppe en bobinant plusieurs couches entrelacées de fibres inclinées présentant une angulation par rapport aux fibres unidirectionnelles longitudinales du longeron. Dès lors, on obtient une enveloppe comportant un bobinage multicouche, pourvu éventuellement de fibres de liaison entre les diverses couches qui participent à l'amélioration de la tenue mécanique et aux chocs exercés sur le caisson. Ces fibres de liaison sont introduites soit par une méthode dénommée « tufting » (couture) en langue anglaise soit par une méthode dénommée « pinning » (cloutage de pions de carbone) en langue anglaise

Selon une autre variante, on réalise cette enveloppe en agençant sur le moyen de reprise de la force centrifuge des tubes ou des chaussettes préalablement tressées de forme sensiblement tubulaire selon un diamètre adapté à la forme et aux dimensions du longeron fini.

Selon une autre variante, on réalise cette enveloppe par un tressage complexe, en combinant le tressage classique de premières fibres entrelacées typiquement selon des angles de plus ou moins quarante cinq degrés par rapport à l'axe longitudinal, avec l'agencement de deuxièmes fibres longitudinales parallèles à l'axe longitudinal entrelacées aux premières fibres. On obtient alors une enveloppe présentant des caractéristiques requises de tenue mécanique selon l'axe longitudinal, en plus des caractéristiques requises de tenue mécanique en torsion.

De plus, il est concevable de déposer plusieurs couches de fibres simultanément, des mèches de liaison étant disposées entre ces couches. L'enveloppe offre ainsi de meilleures caractéristiques de tenue mécanique aux impacts.

Selon un autre aspect, le revêtement extérieur assure la continuité aérodynamique extérieure de la partie aérodynamique de la pale. Le revêtement extérieur peut en outre être un revêtement travaillant participant à la reprise des efforts mécaniques exercés sur la pale, telles que les moments de torsion exercés le long de l'axe de vrillage de la pale. Ce revêtement extérieur travaillant peut alors être réalisé selon une des techniques précitées appliquées pour obtenir l'enveloppe de reprise des sollicitations en torsion.

De plus, ce revêtement extérieur constitue une barrière de protection de la pale en cas d'impact avec un projectile. Ainsi, ce revêtement peut comprendre des fibres tissées, sous forme de tissus indépendants ou liés entre eux, de tresses simples en deux dimensions, de tresses complexes en trois dimensions muni de fils de liaison inter-couches voire même cousues selon des techniques dénommées « stitching » et « tufting » en langue anglaise.

Ce revêtement extérieur peut notamment être réalisé de façon à présenter des fibres longitudinales, éventuellement mais non nécessairement entrelacées avec des fibres agencées en biais pour notamment participer à la reprise des efforts centrifuges notamment en cas de défaillance d'une partie des longerons. Ce type de revêtement extérieur multiaxial peut être réalisé soit par superposition de couches de tissus ou de nappes, soit par un procédé de tressage multiaxial pouvant de plus présenter la caractéristique conue sous la terme « interlock » en langue anglaise.

Ce revêtement extérieur est alors fixé aux longerons au travers d'une liaison par cisaillement/arrachement à base de résine ou d'un adhésif d'interface par exemple.

Par conséquent, selon l'invention, chaque longeron comporte plusieurs caissons délimités chacun par une ceinture de rétention fermée, chaque caisson coopérant avec la même douille de brochage en étant enroulé autour de cette douille de brochage.

Dès lors, on constate qu'un longeron comporte plus de matière au niveau de sa zone d'attache, dénommée couramment « zone d'emplanture », qu'à son autre extrémité.

De plus, chaque longeron comporte alors au moins deux caissons imbriqués l'un dans l'autre, la ceinture de rétention d'un caisson étant entourée par la ceinture de rétention d'un autre caisson. Par exemple, chaque longeron comporte au moins un caisson dit « caisson originel » imbriqué directement dans un caisson dit « caisson final » par commodité, ou indirectement par le biais d'au moins un caisson intermédiaire. Selon une réalisation, un longeron à deux caissons comprend un caisson originel ayant une ceinture de rétention originelle disposée dans la ceinture de rétention finale d'un caisson final, alors qu'un longeron à trois caissons est muni d'un caisson originel ayant une ceinture de rétention originelle disposée dans une ceinture de rétention intermédiaire d'un caisson intermédiaire, cette ceinture de rétention intermédiaire étant entourée par une ceinture de rétention finale du caisson final.

Chaque caisson est alors délimité d'une part par sa ceinture de rétention formant une boucle fermée, et par l'enveloppe de reprise de sollicitations en torsion.

On rappelle que l'on entend par « reprise d'efforts », la reprise de forces et/ou de moments exercés sur la pale.

Sur une pale ordinaire munie d'un longeron en forme de U et non pas en forme de O conformément à l'invention, lorsque cette pale subit des efforts maximaux et notamment des efforts dus à une force centrifuge maximale, suite à un impact, des fibres du longeron peuvent être fragilisées et se rompre les unes après les autres à partir de la surface du longeron la plus proche du revêtement extérieur vers le coeur de ce longeron. En effet, les fibres non endommagées suite à l'impact devant supporter des charges devenues croissantes, ces fibres non endommagées peuvent se rompre les unes après les autres jusqu'à la rupture complète du longeron en cas d'incident.

Par contre, avec la structure à caissons imbriqués en envergure selon l'invention distincte de l'état de la technique, suite à un impact, les fibres du caisson final les plus proches du revêtement extérieur risquent encore de se rompre. Toutefois, les autres fibres des autres caissons gardent leur intégrité et continuent à assurer la tenue structurale de la pale.

Ainsi, même si un caisson est endommagé, le longeron comporte au moins un autre caisson pour faire cheminer les efforts subis par la pale vers un moyeu. Le caisson endommagé remplit alors le rôle d'un fusible afin que les performances de la pale restent acceptables.

La pale peut de plus comporter une ou plusieurs des caractéristiques additionnelles suivantes.

Par exemple, la pale s'étendant en corde d'une zone de bord de fuite vers une zone de bord d'attaque en passant par une zone centrale, cette pale comporte au moins deux longerons, maintenus l'un contre l'autre par le revêtement extérieur, ces deux longerons étant à choisir dans une liste prédéterminée incluant : un longeron extrémal de bord de fuite placé dans la zone de bord de fuite, un longeron extrémal de bord d'attaque placé dans la zone de bord d'attaque et un longeron central placé dans la zone centrale, chaque longeron disposant de sa propre zone de brochage.

La pale est alors non seulement compartimentée selon sa direction longitudinale d'extension en envergure par la présence d'au moins deux caissons par longeron, mais aussi à savoir selon une direction transversale de la pale par la présence d'au moins deux longerons.

Si un caisson d'un longeron est endommagé, les caissons restants de ce longeron restent fonctionnels. Par exemple, dans le cadre d'un longeron à trois caissons, le caisson final peut être endommagé, les caissons intermédiaire et originelle restant fonctionnels.

De plus, si tous les caissons d'un longeron sont endommagés, les efforts subis par la pale cheminent par les autres caissons des autres longerons. Les efforts dus à la force centrifuge ainsi que les moments de battement et de trainée notamment ne sont plus transmis à un moyeu par la douille de brochage du longeron endommagé, mais sont transmis par les douilles de brochage des autres longerons. On note que le revêtement extérieur peut aussi contribuer à la transmission d'au moins une partie des forces et moment subis vers ces douilles de brochage.

En outre, la pale peut comporter un revêtement additionnel disposé soit entre les longerons et le revêtement extérieur, soit à l'extérieur du revêtement extérieur, soit au sein du revêtement extérieur.

On note qu'en cas de rupture d'un longeron, par redondance, les efforts peuvent cheminer d'un longeron à l'autre via le revêtement extérieur. Le revêtement extérieur participe à la transmission des efforts centrifuges et de moments de battement et de trainée seulement en cas de rupture d'un longeron.

Or, lorsqu'un constructeur dimensionne le revêtement extérieur d'une pale, ce constructeur doit faire un compromis entre la tenue mécanique en statique ou en fatigue et le niveau d'absorption d'énergie d'impact.

L'invention permet alors d'augmenter la fonction d'absorption d'énergie d'impact. En effet, du fait des renforts de torsion déposés sur les longerons, il est envisageable d'alléger dans une certaine mesure la contribution du revêtement extérieur à la reprise des efforts de torsion, contrairement à des pales classiques d'avion ou d'hélicoptère ayant des revêtements extérieures contribuant de façon importante à la reprise des efforts en torsion.

Dès lors, il devient possible d'y adjoindre un revêtement additionnel.

Ce revêtement additionnel peut inclure un revêtement dit « revêtement renforcé à la tenue aux impacts » en tissus composites du type connus sous la dénomination « interlock » en langue anglaise pour optimiser ce revêtement extérieur d'un point de vue « absorption d'énergie d'impact ». Ce revêtement antichoc peut être glissé soit entre les longerons et le revêtement extérieur, soit à l'extérieur du revêtement extérieur et donc au contact direct de l'air, soit coincé entre deux tissus du revêtement extérieur.

On rappelle que le tissu « interlock » est une forme de tissage équivalent à plusieurs couches d'un tissu « classiques » assemblées les unes aux autres par des mèches de tissage cheminant d'une couche à une autre. Cette disposition améliore ainsi sensiblement la performance de tolérance aux dommages du tissu.

En complément ou en remplacement du « revêtement renforcé à la tenue aux impacts », le revêtement additionnel peut comprendre un revêtement dit « revêtement amortissant ». Un tel, revêtement amortissant peut comprendre par exemple un matériau de type élastomère chargée

Selon une option, la pale peut comprendre un renfort de liaison. Ce renfort de liaison comporte des fibres de liaison transversales mises en place par un procédé de couture (stitching) ou de cloutage (pinning), les fibres de liaison traversant de part en part le revêtement extérieur et les longerons, et le cas échéant le revêtement additionnel.

Dès lors, le renfort de liaison constitue des chemins de reprise d'efforts entre les longerons et le revêtement extérieur, pour optimiser la participation du revêtement extérieur à la reprise des efforts centrifuges en cas de défaillance d'une partie des longerons.

Selon un autre aspect, la pale s'étendant en envergure d'un pied vers une extrémité libre, le longeron central peut s'étendre en envergure du pied vers l'extrémité libre.

Par ailleurs, le longeron central peut comprendre une ceinture de rétention munie d'une surface supérieure en regard d'un extrados de la pale et d'une surface inférieure en regard d'un intrados de la pale.

Par contre, au moins un longeron extrémal peut comprendre une ceinture de rétention munie d'une première surface en regard du bord d'attaque de la pale et une deuxième surface en regard du bord de fuite de la pale.

Cette inclinaison particulière des longerons extrémaux leur confère un caractère amortissant suite à un choc, le longeron extrémal pouvant absorber une partie de l'énergie résultant du choc à l'instar d'un pare-choc de voiture par exemple.

En outre, la pale comporte selon une variante au moins un premier longeron coopérant avec une première douille de brochage et un deuxième longeron coopérant avec une deuxième douille de brochage, la première douille de brochage et la deuxième douille de brochage étant décalées en corde et/ ou en envergure.

On comprend que la pale comporte au moins une douille de brochage par longeron. Les douilles de brochage peuvent alors être positionnées côté à côte en étant décalées en corde à savoir selon une direction transversale de la pale, en tandem en étant décalées en envergure à savoir l'une derrière l'autre selon une direction longitudinale de la pale, voire être décalées en corde et en envergure.

Selon un autre aspect, au moins un caisson donné d'un longeron peut comprendre un moyen de remplissage inscrit dans la ceinture de rétention délimitant ce caisson donné.

Le moyen de remplissage peut comporter une mousse de remplissage éventuellement pourvue d'au moins un renfort en forme de cavalier, ou un organe rigide obtenu par tressage par exemple.

Il est à noter que lorsque la pale comporte un renfort de liaison entre le revêtement extérieur et chaque longeron, les fibres de liaison de ce renfort de liaison sont préférentiellement disposées au droit des mousses de remplissage afin de ne pas endommager les renforts du longeron.

Le moyen de remplissage peut en outre représenter un corps de remplissage présentant des caractéristiques d'amortissement et/ou d'absorption des chocs par la nature de ses matériaux constitutifs et/ou par les formes de sa structure interne.

Les ceintures de rétention forment avantageusement des boucles de rétention évitant le déchaussement des moyens de remplissage du caisson. Il est à noter que des cavaliers en tissus par exemple peuvent être aménagés dans ces boucles et sur les moyens de remplissage pour renforcer cet effet de rétention.

Ainsi la segmentation du longeron en une pluralité de caissons imbriqués peut permettre de limiter l'étendue d'un arrachement de matière suite à un impact, la matière constituant le moyen de remplissage notamment. Cette notion de rétention de matière a alors pour avantage de limiter la masse de la matière arrachée par un impact, et par suite limite la balourd dangereux résultant d'un tel arrachement. La nature de ces corps de remplissage peut aussi particulièrement être formulée pour absorber l'énergie des chocs. Ces corps de remplissage peuvent aussi être aménagés pour recevoir des dispositifs particuliers d'amortisseurs de chocs par exemple basés sur le principe de l'absorption par déformation ou par rupture de pièces martyres.

De manière alternative, les ceintures de rétention peuvent être suffisamment rigides pour ne pas nécessiter la présence d'un moyen de remplissage.

Par ailleurs, les fibres unidirectionnelles étant dirigées selon un axe longitudinal de la pale, l'enveloppe d'un longeron est éventuellement munie de fibres présentant une orientation comprise entre zéro et plus ou moins quatre vingt dix degrés par rapport à cet axe longitudinal. Le longeron peut alors participer à la transmission de sollicitations en torsion.

Selon un autre aspect, le revêtement extérieur peut inclure au moins un équipement à choisir dans une sélection comprenant un moyen de lutte contre le phénomène de givrage et un moyen de protection blindé contre des impacts.

Selon une réalisation, au moins une ceinture de rétention peut comprendre une pluralité de couches superposées et distinctes de fibres unidirectionnelles, chaque couche comprenant au moins une boucle de fibres unidirectionnelles enroulées autour de ladite douille de brochage.

Selon une réalisation alternative, au moins une ceinture fermée de rétention comprend un ruban de fibres unidirectionnelles enroulées en spirale autour de la douille de brochage.

Par ailleurs, la pale peut comporter un moyen d'attache comprenant une ferrure munie d'un moyen de fixation par douille de brochage.

Lorsque la pale est munie d'un longeron central disposé entre un longeron extrémal de bord d'attaque et un longeron extrémal de bord de fuite, la zone d'attache du longeron central coopère éventuellement par interférence de forme avec un orifice d'accueil ménagé dans la ferrure, la zone d'attache de chaque longeron extrémal étant chacune fixée à une chape de cette ferrure.

De plus, la pale peut comporter un manchon d'attache, la ferrure étant partiellement insérée dans un alésage du manchon et étant fixée de manière réversible au manchon par au moins un organe d'attache.

En outre, le manchon est optionnellement solidaire d'un arbre de commande de pas, cet arbre de commande de pas présentant un épaulement de rétention à l'extérieur de ce manchon.

Outre une pale, l'invention vise un aéronef muni d'un rotor, ce rotor comportant au moins une telle pale.

L'invention et ses avantages apparaîtront avec plus de détails dans le cadre de la description qui suit avec des exemples de réalisation donnés à titre illustratif en référence aux figures annexées qui représentent :
- la figure 1, un schéma d'un aéronef selon l'invention,
- la figure 2, un schéma explicitant un premier mode de réalisation d'un longeron,
- la figure 3, un schéma explicitant un deuxième mode de réalisation d'un longeron,
- les figures 4 et 5, deux schémas explicitant un procédé de fabrication de la pale selon l'invention, et
- les figures 6 et 7 des schémas présentant un moyen d'attache.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X. La première direction est relative à l'envergure d'une pale.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

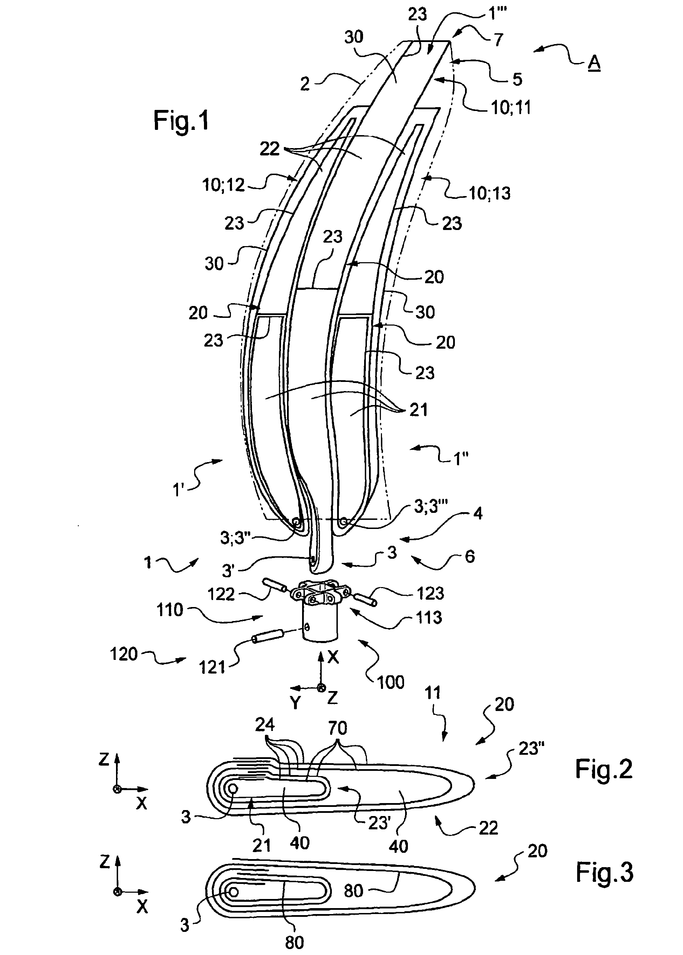

La figure 1 présente un aéronef A muni d'un rotor comportant une pale 1. Seule la pale 1 est représentée par commodité pour ne pas alourdir inutilement cette figure 1.

La pale 1 s'étend en envergure selon la première direction X du pied 6 vers une extrémité libre 7, et selon la deuxième direction Y d'une zone de bord de fuite 1" vers une zone de bord d'attaque 1' en passant par une zone central 1 "'. Enfin, la pale s'étend selon la troisième direction Z d'un intrados vers un extrados.

La pale 1 comprend un revêtement extérieur 2 entourant au moins un longeron 10 de reprise d'efforts pour transmettre les efforts subis par la pale 1 au moyeu du rotor. Chaque longeron s'étend alors d'une zone d'attache 4, qui saille du revêtement extérieur 2 selon l'exemple représenté, vers une zone distale 5 disposée à l'intérieur du revêtement extérieur 2.

On note qu'un longeron peut néanmoins atteindre l'extrémité libre 7 de la pale 1.

Chaque zone d'attache 4 de chaque longeron 10 comporte alors une douille de brochage 3 coopérant avec un moyen d'attache 100 de liaison au moyeu du rotor. On entend donc par « zone d'attache » l'extrémité du longeron à relier à un moyen d'attache de la pale.

En outre, la pale comporte au moins deux longerons 10, maintenus l'un contre l'autre par le revêtement extérieur 2. Selon l'exemple représenté, la pale inclut un longeron extrémal de bord de fuite 13 placé dans la zone de bord de fuite 1", un longeron extrémal de bord d'attaque 12 placé dans la zone de bord d'attaque 1' et un longeron central 11 placé dans la zone centrale 1"' pour éventuellement atteindre l'extrémité libre 7, chaque longeron disposant de sa propre douille de brochage 3.

Ainsi, le moyen d'attache 100 peut comprendre une ferrure 113 munie d'un moyen de fixation 120 par douille de brochage. Le moyen de fixation peut comporter une première broche 121 coopérant avec la douille de brochage 3' du longeron central 11, une deuxième broche 122 coopérant avec la douille de brochage 3" du longeron extrémal de bord d'attaque 12 et une troisième broche 123 coopérant avec la douille de brochage 3"' du longeron extrémal de bord de fuite 13.

On note que deux douilles de brochage de deux longerons distincts peuvent être décalées en corde et / ou en envergure, à savoir respectivement par rapport à la deuxième direction et à la première direction.

Par exemple, la deuxième douille de brochage 3" du longeron extrémal de bord d'attaque 12 et la troisième douille de brochage 3"' du longeron extrémal de bord de fuite 13 sont décalées en corde.

De même, la première douille de brochage 3' du longeron central 11 et la deuxième douille de brochage 3" du longeron extrémal de bord d'attaque 12 ou la troisième douille de brochage 3"' du longeron extrémal de bord de fuite 13 sont décalées en envergure.

Par ailleurs, chaque longeron est un longeron compartimenté incluant d'une part une enveloppe 30 de reprise de sollicitations en torsion et, d'autre part un moyen de reprise de la force centrifuge 20 inscrit dans l'enveloppe 30.

Le moyen de reprise de la force centrifuge 20 est alors pourvu d'au moins deux caissons 21, 22 disposés l'un dans l'autre, chaque caisson coopérant de fait avec les douilles de brochage du longeron. Chaque caisson d'un longeron forme alors un compartiment de ce longeron.

Par suite, chaque caisson comprend une ceinture de rétention 23 fermée munie de fibres unidirectionnelles enroulées autour de la ou des douilles de brochage du longeron. Les fibres unidirectionnelles sont dirigées selon l'axe longitudinal de la pale parallèle à la première direction X pour transmettre au moyeu les efforts subis par la pale 1 dus à la force centrifuge.

De plus, on comprend que la ceinture de rétention d'un caisson d'un longeron est entourée par la ceinture de rétention 23 d'un autre caisson de ce même longeron.

Selon le premier mode de réalisation de la figure 2, au moins une ceinture de rétention 23 comprend une pluralité de couches 70 superposées et distinctes de fibres unidirectionnelles 24. Chaque couche 70 comprend alors au moins une boucle de fibres unidirectionnelles enroulées autour de ladite douille de brochage.

Selon la variante représentée, la première ceinture de rétention 23' d'un premier caisson 21 et la deuxième ceinture de rétention 23" d'un deuxième caisson 21 comprennent chacune deux couches 70.

On note de plus qu'au moins un caisson 21, 22 peut inclure un moyen de remplissage 40, ce moyen de remplissage étant agencé dans la ceinture de rétention du caisson correspondant.

On note que le moyen de remplissage 40 peut lui même :
- être renforcé par une nervure en cavalier disposée notamment à l'intérieur de la ceinture de rétention du caisson afin d'améliorer l'effet de rétention, et/ou
- être renforcé par une enveloppe de remplissage comprenant des fibres composites et de la résine de type époxy ou thermo plastique par exemple, l'enveloppe de remplissage pouvant être obtenu par un procédé de bobinage, de tressage ou de drapage de tissus, et /ou
- être renforcé par des organes d'absorption de chocs tels que des mousses éventuellement renforcées des fibres de carbone ou équivalent, et / ou par des organes d'amortissement tels qu'un organe comprenant un élastomère amortisseur d'énergie par frottement interne.

Selon le deuxième mode de réalisation de la figure 3, au moins une ceinture de rétention 23 fermée comprend un ruban 80 de fibres unidirectionnelles enroulées en spirale autour de la douille de brochage 3 du longeron.

En référence à la figure 1, l'enveloppe 30 entoure alors le moyen de reprise de la force centrifuge 20. Par suite, cette enveloppe 30 est muni de fibres inclinées présentant une angulation par rapport aux fibres unidirectionnelles du moyen de reprise de la force centrifuge 20, selon une orientation comprise entre zéro et plus ou moins quatre vingt dix degrés par rapport à cet axe longitudinal.

Selon un autre aspect, les douilles de brochage de deux longerons distincts peuvent être dirigées selon des directions distinctes.

Par exemple, le longeron central 11 comprend une ceinture de rétention munie d'une surface supérieure en regard d'un extrados de la pale et d'une surface inférieure en regard d'un intrados de la pale. Par suite, la douille de brochage 3' est dirigée selon la deuxième direction Y.

A l'inverse, le longeron extrémal de bord d'attaque 12 et le longeron extrémal de bord de fuite 13 sont pourvus de ceintures de rétention munies d'une première surface en regard du bord d'attaque de la pale et d'une deuxième surface en regard du bord de fuite de la pale. Par suite, les douilles de brochage 3", 3"' de ces longerons sont dirigées parallèlement à la troisième direction Z.

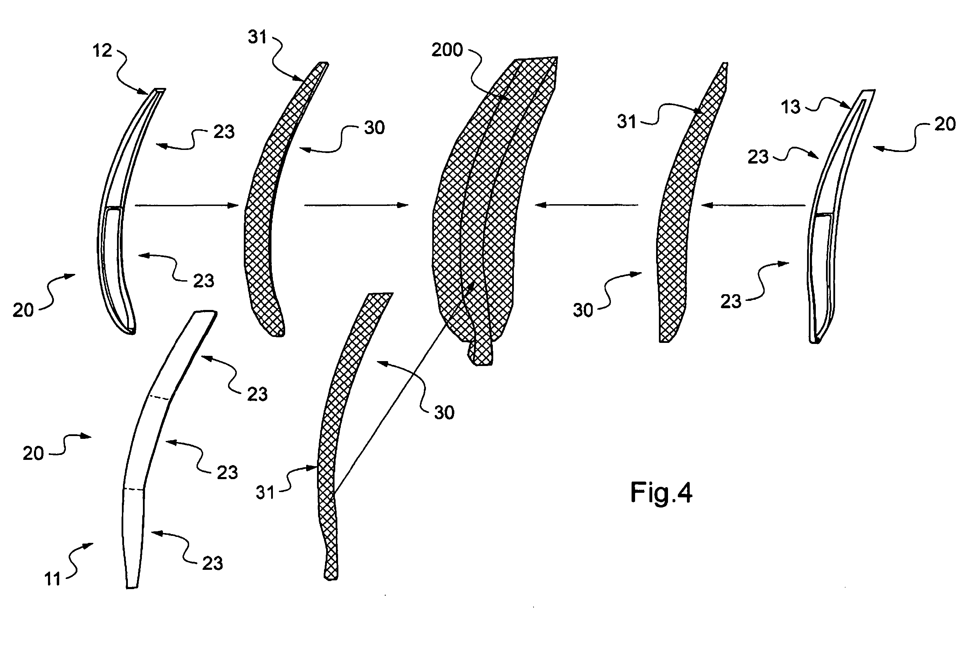

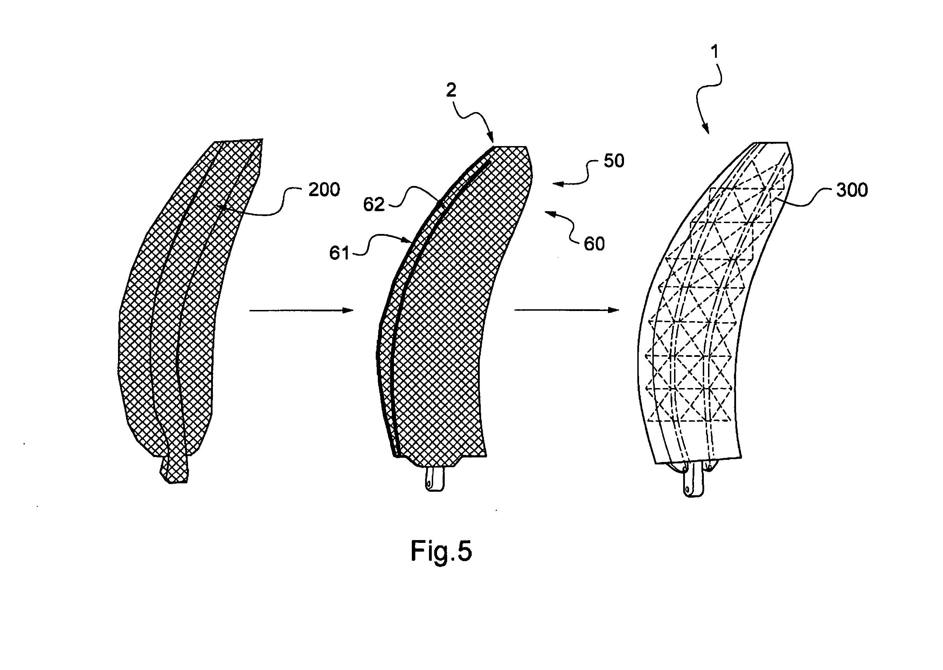

Les figures 4 et 5 explicitent les étapes de fabrication de la pale 1.

En référence à la figure 4, durant une première étape de conception, on met en place les fibres des moyens de reprise de la force centrifuge 20 de chaque longeron 11, 12, 13, puis on polymérise ces moyens de reprise de la force centrifuge 20

Dès lors, durant une deuxième étape de conception, on fabrique l'enveloppe 30 de chaque longeron.

Il est possible de tresser les fibres inclinées d'une enveloppe sur le moyen de reprise de la force centrifuge 20, ou de bobiner ces fibres inclinées d'une enveloppe sur le moyen de reprise de la force centrifuge 20, voire de glisser une « chaussette » munie desdites fibres inclinées sur le moyen de reprise de la force centrifuge 20.

Le longeron central 11, le longeron extrémal de bord d'attaque 12 et le longeron extrémal de bord de fuite 13 sont ensuite positionnés l'un à côté de l'autre pour former un ensemble intermédiaire 200.

Le longeron central 11, le longeron extrémal de bord d'attaque 12 et le longeron extrémal de bord de fuite 13 peuvent être pré-assemblés grâce à un ensemble d'outillages de maintien, voire éventuellement grâce à un bobinage préliminaire léger de préfixation. Un tel bobinage préliminaire peut avoir être réalisé sous la forme d'une mèche de fibres bobinée autour des longerons suivant une hélice dont l'axe de bobinage est l'axe de vrillage de la pale.

En référence la figure 5, on réalise alors le revêtement extérieur 2.

Ce revêtement extérieur 2 peut comporter des fibres extérieures présentant une angulation par rapport aux fibres unidirectionnelles, telle qu'une angulation de plus ou moins 45° pour la reprise de sollicitations en torsions.

Ces fibres extérieures peuvent être appliquées par bobinage, tressage, par le biais de tissus agencés sur l'ensemble 200, voire par le biais d'une «chaussette » glissée sur cet ensemble 200.

On note que le revêtement extérieur 2 peut de plus comprendre au moins un équipement 60, tel qu'un moyen de lutte contre le phénomène de givrage 62 et/ ou un moyen de protection blindé 61 contre des impacts.

De plus, la pale 1 peut comporter un revêtement additionnel 50 que l'on agence soit entre les longerons 10 et le revêtement extérieur 2, soit à l'extérieur du revêtement extérieur 2, soit au sein du revêtement extérieur 2.

Enfin, il est possible de disposer des renforts de liaison 300 entre les longerons et le revêtement extérieur 2. Le renfort de liaison 300 comporte des fibres de liaison traversant de part en part le revêtement extérieur et les longerons, et le cas échéant le revêtement additionnel.

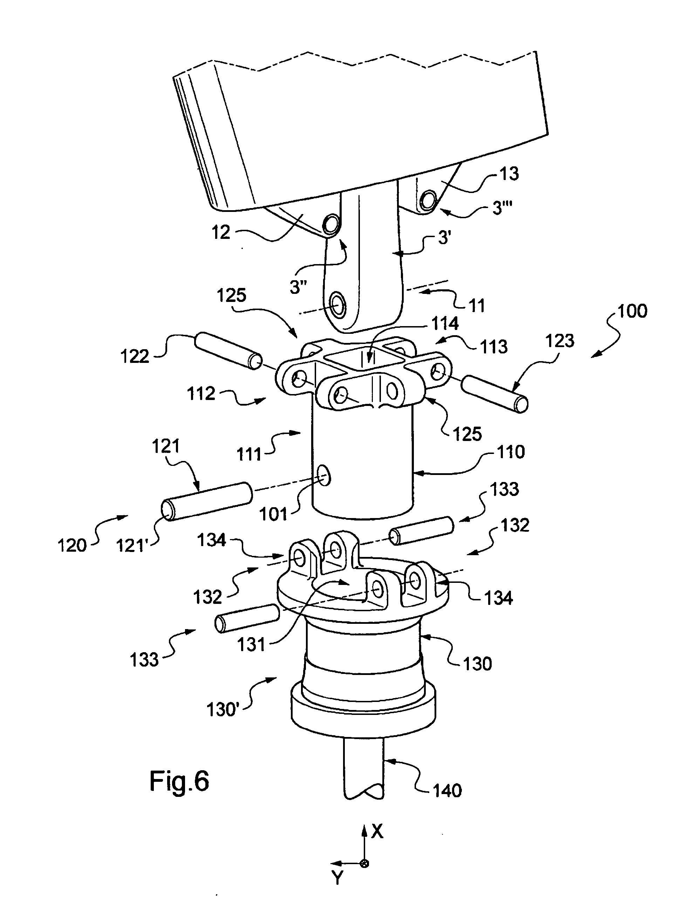

Par ailleurs, la figure 6 présente un moyen d'attache 100 selon une réalisation préférée.

Ce moyen d'attache 100 comprend une ferrure 110, par exemple métallique.

La ferrure 110 est alors munie d'un corps 111 équipé d'un moyen de fixation 120 par douille de brochage des longerons 10 de la pale 1.

Par exemple, le longeron central 11 peut comprendre une première zone d'attache 3' coopérant par interférence de forme avec un orifice d'accueil 114 ménagé dans le corps 111. La première zone d'attache 3' représentée a une section de forme rectangulaire, le corps 111 définissant un orifice d'accueil 114 formant « tunnel » ayant une section de forme complémentaire à la forme de la première zone d'attache 3'. Dès lors, on loge la première zone d'attache 3' dans l'orifice d'accueil 114.

De plus, un premier moyen de fixation 121 comprend un alésage 101 du corps 111 et une première broche 121'. La première broche 121' traverse alors l'alésage 101 et la première zone d'attache 3' de la douille de brochage du longeron central 11. Favorablement, la première broche 121' ne saille pas vers l'extérieur du corps.

En outre, le moyen de fixation 120 comprend une chape 112, 113 associée à une broche 122, 123 par longeron extrémal. Par exemple, chaque broche peut être une vis à corps rectifié et embout fileté, chaque broche coopérant avec un écrou et une rondelle afin que l'embout fileté soit en dehors de la douille de brochage correspondante.

Ainsi, la deuxième zone d'attache 3" du longeron extrémal de bord d'attaque 12 comporte une douille de brochage brochée dans une deuxième chape 112 par une deuxième broche 122. De même, la troisième zone d'attache 3"' du longeron extrémal de bord de fuite 13 comporte une douille de brochage brochée dans une troisième chape 113 par une troisième broche 123.

La liaison entre les longerons de la pale et la ferrure 110 présente donc une pluralité de chemins, par le biais d'une liaison particulière par longeron. Ainsi, si une liaison particulière est accidentellement détruite, les autres liaisons particulières restent fonctionnels et permettent de maintenir fixée la surface portante de la pale à la ferrure.

En outre, cette liaison autorise un démontage aisé de cette surface portante, à des fins de maintenance par exemple.

Il est à noter que la ferrure 110 peut être munie d'une rainure périphérique non représentée pour être guidée par des moyens de roulement à billes ou à rouleaux du rotor. Ces moyens de roulement assurent alors le guidage et la transmission des efforts entre la pale et le moyeu du rotor.

Au contraire, selon la réalisation représentée, le moyen d'attache 10 inclut un manchon 130 munie d'une telle rainure périphérique 130'.

Le corps 111 de la ferrure 110 est alors partiellement inséré dans un alésage central 131 du manchon 130.

De plus, le manchon 130 comporte au moins un organe d'attache 132 de la ferrure 110. Un tel organe d'attache peut comprendre une chape 134 coopérant avec une broche 133 et une saillie 125 de la ferrure 110.

On note que le manchon peut comprendre des moyens d'étanchéité, tels que des joints agencés entre ce manchon et la ferrure pour éviter toute pollution ou stagnation d'humidité.

On comprend qu'un tel manchon peut aisément être désolidarisé de la ferrure, pour des actions de maintenance.

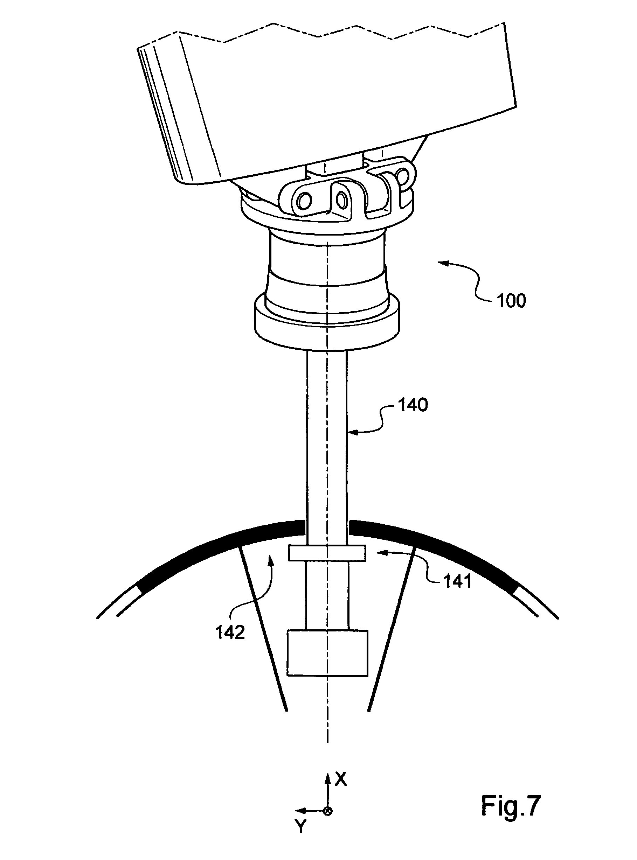

En référence à la figure 7, le manchon peut comprendre un arbre 140 de commande de pas.

Cet arbre 140 de commande de pas présente un épaulement de rétention 141 à l'extérieur de ce manchon 130, apte à coopérer avec une butée 142 d'un moyeu.

Il est à noter que lorsque le moyen d'attache 100 est dépourvu d'un manchon 130, l'arbre 140 de commande est solidarisé à la ferrure 110.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention qui est uniquement défini par le texte des revendications.

## Revendications

1. Pale (1) de rotor munie d'un revêtement extérieur (2) et d'au moins un longeron (10) de reprise d'efforts associé à au moins une douille de brochage (3), ce longeron (10) s'étendant en envergure d'une zone d'attache (4) vers une zone distale (5), ladite zone d'attache (4) d'un longeron (10) étant traversée par ladite au moins une douille de brochage (3) de ce longeron (10),
**caractérisée en ce que** chaque longeron (10) est un longeron compartimenté comprenant un moyen de reprise de la force centrifuge (20) inscrit dans une enveloppe (30) de reprise de sollicitations en torsion, ledit moyen de reprise de la force centrifuge (20) comportant au moins deux caissons (21, 22) traversés chacun par ladite douille de brochage (3) du longeron (10), chaque caisson formant un compartiment d'un longeron, chaque caisson (21, 22) comprenant une ceinture de rétention (23) fermée s'étendant selon l'envergure de la pale, la ceinture de rétention (23) d'un caisson (22) d'un longeron entourant la ceinture de rétention (23) d'un autre caisson (21) de ce longeron, chaque ceinture de rétention (23) étant munie de fibres unidirectionnelles (24) enroulées autour de ladite douille de brochage (3), ladite enveloppe (30) étant munie de fibres inclinées (31) présentant une angulation par rapport auxdites fibres unidirectionnelles (24).

2. Pale selon la revendication 1,
**caractérisée en ce que**, ladite pale s'étendant en corde d'une zone de bord de fuite (1") vers une zone de bord d'attaque (1') en passant par une zone centrale (1 "'), ladite pale comporte au moins deux longerons (10), maintenus l'un contre l'autre par le revêtement extérieur (2), ces deux longerons étant à choisir dans une liste prédéterminée incluant : un longeron extrémal de bord de fuite (13) placé dans la zone de bord de fuite, un longeron extrémal de bord d'attaque (12) placé dans la zone de bord d'attaque et un longeron central (11) placé dans la zone centrale, chaque longeron disposant de sa propre zone de brochage.

3. Pale selon la revendication 2,
**caractérisée en ce qu'**elle comporte un revêtement additionnel (50) disposé soit entre lesdits longerons (10) et le revêtement extérieur (2), soit à l'extérieur du revêtement extérieur (2), soit au sein du revêtement extérieur (2).

4. Pale selon l'une quelconque des revendications 2 à 3,
**caractérisée en ce que**, ladite pale s'étendant en envergure d'un pied (6) vers une extrémité libre (7), ledit longeron central (11) s'étend en envergure dudit pied vers ladite extrémité libre.

5. Pale selon l'une quelconque des revendications 2 à 4,
**caractérisée en ce que**, ledit longeron central (11) comprend une ceinture de rétention munie d'une surface supérieure en regard d'un extrados de la pale et d'une surface inférieure en regard d'un intrados de la pale.

6. Pale selon l'une quelconque des revendications 2 à 5,
**caractérisée en ce que**, au moins un longeron extrémal (12, 13) comprend une ceinture de rétention munie d'une première surface en regard du bord d'attaque de la pale et une deuxième surface en regard du bord de fuite de la pale.

7. Pale selon l'une quelconque des revendications 1 à 6,
**caractérisée en ce que**, ladite pale comporte au moins un premier longeron coopérant avec une première douille de brochage et un deuxième longeron coopérant avec une deuxième douille de brochage, la première douille de brochage et la deuxième douille de brochage étant décalées en corde et/ ou en envergure.

8. Pale selon l'une quelconque des revendications 1 à 7,
**caractérisée en ce qu'**au moins un caisson donné d'un longeron comprend un moyen de remplissage (40) inscrit dans la ceinture de rétention délimitant ce caisson donné.

9. Pale selon l'une quelconque des revendications 1 à 8,
**caractérisée en ce que**, lesdites fibres unidirectionnelles (24) étant dirigées selon un axe longitudinal de la pale, l'enveloppe (30) d'un longeron est munie de fibres inclinées (31) présentant une angulation comprise entre zéro et plus ou moins quatre vingt dix degrés par rapport à cet axe longitudinal.

10. Pale selon l'une quelconque des revendications 1 à 9,
**caractérisée en ce que** ledit revêtement extérieur (2) inclut au moins un équipement (60) à choisir dans une sélection comprenant un moyen de lutte contre le phénomène de givrage (62) et un moyen de protection blindé (61) contre des impacts.

11. Pale selon l'une quelconque des revendications 1 à 10,
**caractérisée en ce qu'**au moins une ceinture de rétention (23) comprend une pluralité de couches (70) superposées et distinctes de fibres unidirectionnelles (24), chaque couche (70) comprenant au moins une boucle de fibres unidirectionnelles enroulées autour de ladite douille de brochage.

12. Pale selon l'une quelconque des revendications 1 à 11, **caractérisée en ce qu'**au moins une ceinture de rétention (23) fermée comprend un ruban de fibres unidirectionnelles enroulées en spirale autour de ladite douille de brochage.

13. Pale selon l'une quelconque des revendications 1 à 12,
**caractérisée en ce qu'**elle comporte un renfort de liaison (300) muni de fibres de liaison traversant de part en part le revêtement extérieur (2) et chaque longeron (10).

14. Pale selon l'une quelconque des revendications 1 à 13,
**caractérisée en ce qu'**elle comporte un moyen d'attache (100) comprenant une ferrure (110) munie d'un moyen de fixation (120) par douille de brochage.

15. Pale selon la revendication 14,
**caractérisée en ce que** ladite pale étant munie d'un longeron central (11) disposé entre un longeron extrémal de bord d'attaque (21) et un longeron extrémal de bord de fuite (13), ladite zone d'attache (3') du longeron central (11) coopère par interférence de forme avec un orifice d'accueil (114) ménagé dans ladite ferrure (110), la zone d'attache (3", 3"') de chaque longeron extrémal (12,13) étant chacune fixée à une chape (112, 113) de ladite ferrure (110).

16. Pale selon l'une quelconque des revendications 14 à 15,
**caractérisée en ce qu'**elle comporte un manchon (130) d'attache, ladite ferrure (110) étant partiellement insérée dans un alésage (131) dudit manchon, ladite ferrure (110) étant fixée de manière réversible au manchon (130) par au moins un organe d'attache (132).

17. Pale selon l'une quelconque des revendications 14 à 16,
**caractérisée en ce que** ledit manchon (120) est solidaire d'un arbre (140) de commande de pas, ledit arbre (140) de commande de pas présentant un épaulement de rétention (141) à l'extérieur de ce manchon (130).

18. Aéronef (A) muni d'un rotor,
**caractérisée en ce que** le rotor comporte au moins une pale (1) selon l'une quelconque des revendications 1 à 17.

## Patentansprüche

1. Rotorblatt (1), welches mit einer Außenhaut (2) und mindestens einem Längsträger (10) zur Aufnahme von Kräften mit mindestens einer Steckhülse (3) versehen ist, wobei der Längsträger (10) sich von einem Befestigungsbereich (4) zu einem distalen Bereich (5) spannt, wobei der Befestigungsbereich (4) eines Längsträgers (10) von der mindestens einen Steckhülse (3) dieses Längsträgers (10) durchquert wird,
**dadurch gekennzeichnet, dass** jeder Längsträger (10) ein unterteilter Längsträger ist mit einem Mittel (20) zur Aufnahme der Zentrifugalkraft, welches in einer Hülle (30) zur Aufnahme von Torsionsbeanspruchungen angeordnet ist, wobei das Mittel (20) zur Aufnahme der Zentrifugalkraft mindestens zwei Kammern (21, 22) aufweist, die jeweils von der Steckhülse (3) des Längsträgers (10) durchquert sind, wobei jede Kammer ein Fach eines Längsträgers bildet, wobei jede Kammer (21, 22) einen geschlossenen Rückhaltegurt (23) aufweist, der sich längs der Spannweite des Rotorblatts erstreckt, wobei der Rückhaltegurt (23) einer Kammer (22) eines Längsträgers den Rückhaltegurt (23) einer anderen Kammer (21) dieses Längsträgers umschließt, wobei jeder Rückhaltegurt (23) mit einseitig ausgerichteten Fasern (24) versehen ist, die um die Steckhülse (3) gewickelt sind, wobei die Hülle (30) mit schräg verlaufenden Fasern (31) versehen ist, die einen Winkel mit den einseitig ausgerichteten Fasern (24) einschließen.

2. Rotorblatt nach Anspruch 1,
**dadurch gekennzeichnet, dass** das Rotorblatt sich in Querrichtung von einem Hinterkantenbereich (1") bis zu einem Vorderkantenbereich (1') über einen mittleren Bereich (1"') erstreckt, wobei das Rotorblatt mindestens zwei Längsträger (10) aufweist, die einer gegen den anderen von der Außenhaut (2) gehalten werden, wobei die beiden Längsträger aus einer vorbestimmten Liste auszuwählen sind, die umfasst: einen extremalen Hinterkantenträger (13), der in dem Bereich der Hinterkante angeordnet ist, einen extremalen Vorderkantenträger (12), der in dem Bereich der Vorderkante angeordnet ist, und einen mittleren Längsträger (11), der in dem mittleren Bereich angeordnet ist, wobei jeder Längsträger über seinen eigenen Steckbereich verfügt.

3. Rotorblatt nach Anspruch 2,
**dadurch gekennzeichnet, dass** es eine zusätzliche Haut (50) aufweist, die entweder zwischen den Längsträgern (10) und der Außenhaut (2) oder auf der Außenseite der Außenhaut (2) oder innerhalb der Außenhaut (2) angeordnet ist.

4. Rotorblatt nach einem der Ansprüche 2 bis 3,
**dadurch gekennzeichnet, dass** das Rotorblatt sich von einem Fuß (6) bis zu einem freien Ende (7) erstreckt, wobei der mittlere Längsträger (11) sich von dem Fuß bis zu dem freien Ende hin erstreckt.

5. Rotorblatt nach einem der Ansprüche 2 bis 4,
**dadurch gekennzeichnet, dass** der mittlere Längsträger (11) einen Rückhaltegurt aufweist, der mit einer oberen Fläche gegenüber einer Außenseite des Rotorblatts und mit einer unteren Fläche gegenüber einer Innenseite des Rotorblatts versehen ist.

6. Rotorblatt nach einem der Ansprüche 2 bis 5,
**dadurch gekennzeichnet, dass** mindestens ein extremaler Längsträger (12, 13) einen Rückhaltegurt aufweist, der mit einer ersten Fläche versehen ist, die gegenüber der Vorderkante des Rotorblatts liegt, und mit einer zweiten Fläche, die gegenüber der Hinterkante des Rotorblatts liegt.

7. Rotorblatt nach einem der Ansprüche 1 bis 6,
**dadurch gekennzeichnet, dass** das Rotorblatt mindestens einen ersten Längsträger aufweist, der mit einer ersten Steckhülse zusammenwirkt, und einen zweiten Längsträger, der mit einer zweiten Steckhülse zusammenwirkt, wobei die erste Steckhülse und die zweite Steckhülse in Querrichtung und/oder in Längserstreckungsrichtung gegeneinander versetzt sind.

8. Rotorblatt nach einem der Ansprüche 1 bis 7,
**dadurch gekennzeichnet, dass** mindestens eine gegebene Kammer eines Längsträgers ein Füllmittel (40) aufweist, das von dem Rückhaltegurt aufgenommen wird, der die gegebene Kammer eingrenzt.

9. Rotorblatt nach einem der Ansprüche 1 bis 8,
**dadurch gekennzeichnet, dass** die unidirektionalen Fasern (24) entlang einer Längsachse des Rotorblatts ausgerichtet sind, wobei die Hülle (30) eines Längsträgers mit schräg verlaufenden Fasern (31) versehen ist, die einen Winkel zwischen Null und mehr oder weniger 90° bezüglich dieser Längsachse einschießen.

10. Rotorblatt nach einem der Ansprüche 1 bis 9,
**dadurch gekennzeichnet, dass** die Außenhaut (2) mindestens eine Ausrüstung (60) umfasst, die aus einer Auswahl zu wählen ist, die ein Mittel (62) gegen Vereisung und ein gepanzertes Mittel (61) zum Schutz gegen Einschläge umfasst.

11. Rotorblatt nach einem der Ansprüche 1 bis 10,
**dadurch gekennzeichnet, dass** mindestens ein Rückhaltegurt (23) eine Mehrzahl von getrennten und übereinander angeordneten Schichten (70) von unidirektionalen Fasern (24) aufweist, wobei jede Schicht (70) mindestens eine Schleife aus unidirektionalen Fasern aufweist, die um die Steckhülse gewickelt sind.

12. Rotorblatt nach einem der Ansprüche 1 bis 11,
**dadurch gekennzeichnet, dass** mindestens ein geschlossener Rückhaltegurt (23) ein Band aus unidirektionalen Fasern aufweist, die spiralförmig um die Steckhülse gewickelt sind.

13. Rotorblatt nach einem der Ansprüche 1 bis 12,
**dadurch gekennzeichnet, dass** es eine Verbindungsverstärkung (300) aufweist, die mit Verbindungsfasern versehen ist, die die Außenhaut (2) und jeden Längsträger (10) durchqueren.

14. Rotorblatt nach einem der Ansprüche 1 bis 13,
**dadurch gekennzeichnet, dass** es ein Befestigungsmittel (100) aufweist mit einem Beschlag (110), der mit einem Mittel zur Befestigung (120) durch die Steckhülse versehen ist.

15. Rotorblatt nach Anspruch 14,
**dadurch gekennzeichnet, dass** das Rotorblatt mit einem mittleren Längsträger (11) versehen ist, der zwischen einem extremalen Vorderkanten-Längsträger (21) und einem extremalen Hinterkanten-Längsträger (13) angeordnet ist, wobei der Befestigungsbereich (3') des mittleren Längsträgers (11) durch Formschluss mit einer Aufnahmeöffnung (114) zusammenwirkt, die in den Beschlag (110) eingearbeitet ist, wobei der Befestigungsbereich (3", 3"') eines jeden extremalen Längsträgers (12, 13) an einem Gelenkkopf (112, 113) des Beschlags (110) befestigt ist.

16. Rotorblatt nach einem der Ansprüche 14 bis 15,
**dadurch gekennzeichnet, dass** es eine Befestigungsmuffe (130) des Beschlags (110) aufweist, der teilweise in eine Ausnehmung (131) der Muffe eingefügt ist, wobei der Beschlag (110) durch mindestens ein Befestigungsorgan (132) lösbar an der Muffe (130) befestigt ist.

17. Rotorblatt nach einem der Ansprüche 14 bis 16,
**dadurch gekennzeichnet, dass** die Muffe (120) mit einer Anstellwinkel-Steuerwelle (140) fest verbunden ist, wobei die Anstellwinkel-Steuerwelle (140) eine Schulter (140) zur Halterung am Äußeren der Muffe (130) aufweist.

18. Luftfahrzeug (A) mit einem Rotor,
**dadurch gekennzeichnet, dass** der Rotor mindestens ein Rotorblatt (1) gemäß einem der Ansprüche 1 bis 17 aufweist.

## Claims

1. Rotor blade (1) provided with an outer covering (2) and with at least one load take-up spar (10) associated with at least one pin bushing (3), the spar (10) extending spanwise from an attachment zone (4) towards a distal zone (5), said attachment zone (4) of a spar (10) having said at least one pin bushing (3) of the spar (10) passing therethrough,
**characterised in that** each spar (10) is a compartmentalised spar comprising a centrifugal force take-up means (20) incorporated in a twisting stress take-up casing (30), said centrifugal force take-up means (20) comprising at least two boxes (21, 22), each having said pin bushing (3) of the spar (10) passing therethrough, each box forming a compartment of a spar, each box (21, 22) comprising a closed retention belt (23) extending in the spanwise direction of the blade, the retention belt (23) of one box (22) of a spar surrounding the retention belt (23) of another box (21) of the spar, each retention belt (23) being provided with unidirectional fibres (24) wound around said pin bushing (3), said casing (30) being provided with inclined fibres (31) being angled relative to said unidirectional fibres (24).

2. Blade according to claim 1,
**characterised in that**, said blade extending chordwise from a trailing edge zone (1") towards a leading-edge zone (1') while passing through a central zone (1"'), said blade comprises at least two spars (10) that are held one against the other by the outer covering (2), these two spars being chosen from a predetermined list including: a trailing edge extremal spar (13) placed in the trailing edge zone, a leading edge extremal spar (12) placed in the leading edge zone and a central spar (11) placed in the central zone, each spar having its own pin zone.

3. Blade according to claim 2,
**characterised in that** it comprises an additional covering (50) arranged either between said spars (10) and the outer covering (2), or outside the outer covering (2), or else within the outer covering (2).

4. Blade according to any one of claims 2 to 3,
**characterised in that**, said blade extending spanwise from a root (6) towards a free end (7), said central spar (11) extends spanwise from said root towards said free end.

5. Blade according to any one of claims 2 to 4,
**characterised in that**, said central spar (11) comprises a retention belt provided with a top surface facing a suction-side surface of the blade and a bottom surface facing a pressure-side surface of the blade.

6. Blade according to any one of claims 2 to 5,
**characterised in that**, at least one extremal spar (12, 13) comprises a retention belt provided with a first surface facing the leading edge of the blade and a second surface facing the trailing edge of the blade.

7. Blade according to any one of claims 1 to 6,
**characterised in that**, said blade comprises at least a first spar co-operating with a first pin bushing and a second spar
co-operating with a second pin bushing, the first pin bushing and the second pin bushing being offset chordwise and/or spanwise.

8. Blade according to any one of claims 1 to 7,
**characterised in that** at least one given box of a spar comprises a filler means (40) incorporated in the retention belt defining said given box.

9. Blade according to any one of claims 1 to 8,
**characterised in that**, said unidirectional fibres (24) being directed along a longitudinal axis of the blade, the casing (30) of a spar is provided with inclined fibres (31) being angled between zero and plus or minus ninety degrees relative to said longitudinal axis.

10. Blade according to any one of claims 1 to 9,
**characterised in that** said outer covering (2) includes at least one piece of equipment (60) to be chosen from a selection comprising a combating means (62) for combating the icing phenomenon and a shielding protection means (61) for providing shielding protection against impacts.

11. Blade according to any one of claims 1 to 10,
**characterised in that** at least one retention belt (23) comprises a plurality of superposed and different layers (70) of unidirectional fibres (24), each layer (70) comprising at least one loop of unidirectional fibres wound around said pin bushing.

12. Blade according to any one of claims 1 to 11,
**characterised in that** at least one closed retention belt (23) comprises a tape of unidirectional fibres spiral wound around said pin bushing.

13. Blade according to any one of claims 1 to 12,
**characterised in that** it comprises a connection reinforcement (300) provided with connection fibres passing right through the outer covering (2) and each spar (10).

14. Blade according to any one of claims 1 to 13,
**characterised in that** it comprises an attachment means (100) comprising a fitting (110) provided with one fastening means (120) per pin bushing.

15. Blade according to claim 14,
**characterised in that** said blade being provided with a central spar (11) arranged between a leading edge extremal spar (21) and a trailing edge extremal spar (13), said attachment zone (3') of the central spar (11) co-operates by shape interference with a receiving orifice (114) formed in said fitting (110), the attachment zone (3", 3"') of each extremal spar (12,13) being each fastened to a fork (112, 113) of said fitting (110).

16. Blade according to any one of claims 14 to 15,
**characterised in that** it comprises an attachment sleeve (130), said fitting (110) being partially inserted in a bore (131) of said sleeve, said fitting (110) being reversibly fastened to the sleeve (130) by at least one attachment member (132).

17. Blade according to any one of claims 14 to 16,
**characterised in that** said sleeve (120) is integral with a pitch control shaft (140), said pitch control shaft (140) presenting a retention shoulder (141) outside this sleeve (130).

18. Aircraft (A) provided with a rotor,
**characterised in that** the rotor comprises at least one blade (1) according to any one of claims 1 to 17.
